# EUROPÄISCHE PATENTSCHRIFT

(11) **EP 1 926 049 B1**
(45) Veröffentlichungstag und Bekanntmachung des Hinweises auf die Patenterteilung: **20.10.2010**
(21) Anmeldenummer: 07013741.9
(22) Anmeldetag: 13.07.2007
(51) Int. Cl.: G06T 7/00

(54) **Verfahren zur Korrektur einer Volumenabbildungsgleichung zur Bestimmung eines Geschwindigkeitsfeldes von Teilchen in einem Volumen**
Method for correcting a volume mapping equation for determining a velocity field for particles in a volume
Procédé destiné à la correction d'une comparaison d'application de volumes pour déterminer une plage de vitesse de petites pièces dans un volume

(30) Priorität: 25.11.2006 DE 102006055746
(43) Veröffentlichungstag der Anmeldung: 28.05.2008
(73) Patentinhaber: LaVision GmbH, 37081 Göttingen (DE)
(72) Erfinder: Wieneke, Bernhard, 37085 Göttingen (DE)
(74) Vertreter: Walther, Walther & Hinz GbR

(56) Entgegenhaltungen:
- WIENEKE B: "Stereo-PIV using self-calibration on particle images" EXPERIMENTS IN FLUIDS ; EXPERIMENTAL METHODS AND THEIR APPLICATIONS TO FLUID FLOW, SPRINGER-VERLAG, BE, Bd. 39, Nr. 2, 1. August 2005 (2005-08-01), Seiten 267-280, XP019338232 ISSN: 1432-1114
- LOUHICHI HANENE ET AL: "Camera self-calibration in scheimpflug condition for air flow investigation" LECT. NOTES COMPUT. SCI.; LECTURE NOTES IN COMPUTER SCIENCE (INCLUDING SUBSERIES LECTURE NOTES IN ARTIFICIAL INTELLIGENCE AND LECTURE NOTES IN BIOINFORMATICS); ADVANCES IN VISUAL COMPUTING - SECOND INTERNATIONAL SYMPOSIUM, ISVC 2006, PROCEEDINGS 2006, Bd. 4292 LNCS - II, 6. November 2006 (2006-11-06), - 8. November 2006 (2006-11-08) Seiten 891-900, XP002468296
- CAO ET AL: "Self-calibration from turn-table sequences in presence of zoom and focus" COMPUTER VISION AND IMAGE UNDERSTANDING, ACADEMIC PRESS, SAN DIEGO, CA, US, Bd. 102, Nr. 3, Juni 2006 (2006-06), Seiten 227-237, XP005416168 ISSN: 1077-3142
- STOLKIN R ET AL: "Video with Ground-Truth for Validation of Visual Registration, Tracking and Navigation Algorithms" COMPUTER AND ROBOT VISION, 2005. PROCEEDINGS. THE 2ND CANADIAN CONFERENCE ON VICTORIA, BC, CANADA 09-11 MAY 2005, PISCATAWAY, NJ, USA,IEEE, 9. Mai 2005 (2005-05-09), Seiten 210-217, XP010809029 ISBN: 0-7695-2319-6
- SKRYPNYK I ET AL: "Scene Modelling, Recognition and Tracking with Invariant Image Features" MIXED AND AUGMENTED REALITY, 2004. ISMAR 2004. THIRD IEEE AND ACM INTERNATIONAL SYMPOSIUM ON ARLINGTON, VA, USA 02-05 NOV. 2004, PISCATAWAY, NJ, USA,IEEE, 2. November 2004 (2004-11-02), Seiten 110-119, XP010769634 ISBN: 0-7695-2191-6

## Beschreibung

Die vorliegende Erfindung betrifft ein Verfahren zur Korrektur einer Volumenabbildungsgleichung zur Bestimmung eines Geschwindigkeitsfeldes von Teilchen in einem Volumen.

Ein Standardverfahren zur Messung von Geschwindigkeiten in Gasen oder Flüssigkeiten stellt das sogenannte Particel Image Velocimetry (PIV) Verfahren (DE 199 28 698 A1) zur Verfügung, bei dem die Strömung mit kleinen Teilchen versetzt wird und eine dünne Beobachtungsebene üblicherweise mit einem Laser zweimal kurz hintereinander beleuchtet und von einer senkrecht zur Beobachtungsebene positionierten Kamera aufgenommen wird. Diese Kamera ist in der Lage, zwei Bilder schnell hintereinander aufzunehmen. Diese Kamerabilder werden in kleine Interrogationsfenster unterteilt, und an einem Ort x, y werden die beiden Interrogationsfenster zu den beiden Aufnahmezeitpunkten kreuzkorreliert, um durch den höchsten Korrelationspeak den wahrscheinlichsten Verschiebungsvektor dx, dy zwischen den beiden Interrogationsfenstern zu bestimmen. Mit einer solchen Kamera ergibt sich somit ein zweidimensionales Geschwindigkeitsfeld mit den entsprechenden Geschwindigkeitskomponenten innerhalb der Beleuchtungsebene. Mit einer zweiten Kamera lässt sich außerdem die dritte Geschwindigkeitskomponente senkrecht zur Lichtschnittebene mittels stereoskopischer Verrechnung bestimmen (Stereo-PIV).

Um nunmehr ein Geschwindigkeitsfeld nicht nur in einer Ebene, sondern in einem Volumen zu messen, sind des Weiteren verschiedene Verfahren entwickelt worden. So kann z. B. ein Lichtschnitt schnell durch ein Volumen beispielsweise mit Hilfe eines Drehspiegels verschoben und mit einer entsprechend schnellen Kamera können mehrere Ebenen in kurzer Zeit nacheinander aufgenommen werden.

Alternativ können auch mehrere Ebenen kurz hintereinander belichtet werden und für jede Ebene kann eine eigene Kamera vorgesehen sein, wie dies in der US 5,883,707 A1 beschrieben ist.

Ein anderes Verfahren basiert auf der Aufnahme eines kompletten Volumens mit zwei oder mehr Kameras gleichzeitig (US 5,905,568). Die beobachteten Teilchen werden in jedem Kamerabild lokalisiert, und mittels Triangulation wird die (X, Y, Z)-Position der Teilchen bestimmt. Ein Teilchen in einem Bild 1 liegt dabei in Abhängigkeit von der Tiefe z im Kamerabild 2 entlang einer epipolaren Linie. Aus der Position zu unterschiedlichen Zeiten wird mit Hilfe eines Zuordnungsalgorithmus die Geschwindigkeit der Teilchen bestimmt (3D PTV = 3D-Particle-Tracking-Velocimetry). Wie bei Stereo-PIV ist ebenfalls eine genaue Volumenkalibrierung der Kameras erforderlich. Nachteilig ist bei diesem Verfahren, dass die Teilchendichte relativ gering sein muss, da überlappende Teilchen zu Fehlern führen und bei dem Triangulationsschritt zu viele mögliche Teilchen auf den epipolaren Linien liegen und damit zu nicht existierenden Phantomteilchen führen.

Aus der DE 103 43 160.8 A1 ist weiterhin ein Verfahren zur Bestimmung eines dreidimensionalen Geschwindigkeitsfeldes in einem Volumen bekannt (Tomographisches PIV), wobei durch Beleuchtung des Volumens die in dem Volumen befindlichen Teilchen zur Strahlung angeregt werden. Des Weiteren sind mindestens zwei Kameras vorgesehen, die zumindest zu zwei verschiedenen Zeiten t₁, t₂ eine zeitgleiche Aufnahme machen. Hierbei wird dasselbe Voxel (Volumeneinheit) an der Position (X, Y, Z) aus dem Volumen auf die Bildebene durch Abbildungsgleichungen in den Kamerapunkten (xᵢ, yᵢ) der mindestens zwei Kameras abgebildet. Dann werden die Intensitäten der Voxel entlang der Sichtlinie auf den Kamerabildpunkten (xᵢ, yᵢ) zu den mindestens zwei verschiedenen Zeiten t₁, t₂ gemessen. Durch die Verrechnung der Intensitäten an den den Voxeln entsprechenden Bildpunkten xᵢ, yᵢ wird die Intensität des Voxels im Volumen rekonstruiert. Hierbei wird zur Bestimmung eines Interrogationsvolumens die Intensität aller Voxel gemäß den zuvor aufgeführten Schritten zu jeweils unterschiedlichen Zeiten t₁, t₂ ermittelt.

Durch dreidimensionale Kreuzkorrelation wird zwischen den beiden Interrogationsvolumen zu den Zeitpunkten t₁ und t₂ der Verschiebungsvektor (dₓ, d_{y}, d_{z}) in dem Beobachtungsvolumen bestimmt, so dass sich hiermit ein komplettes Geschwindigkeitsfeld für das Beobachtungsvolumen ergibt.

Dieses Verfahren wie auch das 3D-Particle Tracking als solches arbeitet überaus zufriedenstellend; nachteilig hierbei ist lediglich, dass eine sehr genaue Kalibrierung erforderlich ist. Meist erfolgt die Kalibrierung mit Hilfe einer Kalibrierplatte, die durch das Volumen verschoben wird. Hierbei ergeben sich oft experimentelle Fehlerquellen, z.B. durch ungenaue Verschiebung oder durch optische Verzerrungen. Mit einer genaueren Kalibrierung können insofern auch genauere Aussagen über das Geschwindigkeitsfeld von Teilchen in einem Volumen getroffen werden.

Für alle Volumenverfahren wird eine Abbildungsgleichung durch eine Volumenkalibrierung ermittelt, bei der eine Funktion M (X,Y;Z) von einem Raumpunkt X, Y, Z auf die Bildkoordinaten xᵢ, yᵢ der i-ten Kamera bestimmt wird. Hierfür wird in der Praxis oft ein perspektivisches Kamera-Lochblenden-Modell mit geeigneten Verzerrungskoeffizienten benutzt [Hartley and Zisserman, Multiple View Geometry, Cambridge University Press, 2000, ISBN 05216230349]. Für die Bestimmung der Abbildungsgleichung wird auch auf die DE 103 12 698 B3 verwiesen.

Eine andere, weitere Möglichkeit für die Bildung der Abbildungsfunktion M (X, Y, Z) besteht in der Verwendung einer Polynomfunktion dritten Grades in den Raumkoordinaten X, Y, Z [Soloff SM, Adrian RJ, Liu ZC (1997) Distortion compensation for generalized stereoscopic particle image velocimetry, Meas Sci Technol 8:1441-1454].

Aus LOUHICHI HANENE ET AL:
"Camera Self-calibration in Scheimpflug Condition for Air Flow Investigation"
G. BEBIS et al. (Eds.): ISVC 2006, LNCS 4292, pp. 891-900, Springer-Verlag Berlin-Heidelberg 2006,
ist die Erstellung einer Abbildungsgleichung mit Hilfe einer Kalibrierplatte, die durch den Raum bewegt wird, bekannt.

Auf der Kalibrierplatte sind Markierungen angeordnet, deren Position auf der Kalibrierplatte nicht notwendigerweise exakt bekannt sein muss, wobei jedoch die Position der Markierungen zueinander konstant ist.

Des Weiteren zeigt die Kalibrierplatte eine gesonderte weitere Marke. Diese gesonderte weitere Marke dient der Zuordnung, welche Markierung in dem Bild der ersten Kamera einer Markierung ein dem Bild der zweiten Kamera entspricht.

Anhand der Position der Markierungen auf den Kamerabildern wird eine Abbildungsgleichung erstellt, die jedem Raumpunkt X, Y, Z die entsprechenden Bildpunkte x₁, y₁ und x₂, y₂ der beiden Kameras zuordnet.

Ein Verfahren zur Korrektur einer Volumenabbildungsgleichung zur genaueren Bestimmung eines Geschwindigkeitsfeldes von Teilchen in einem Volumen, mithin ein genaueres Kalibierverfahren, zeichnet sich erfindungsgemäß dadurch aus, dass das Volumen von mindestens zwei Kameras aus unterschiedlichen Richtungen aufgenommen wird, wobei zunächst durch eine Grobkalibrierung der Stellung der Kameras zueinander und relativ zu dem zu betrachtenden Volumen eine ursprüngliche Abbildungsgleichung bestimmt wird, die den Koordinaten (X, Y, Z) eines Punktes im Volumen die entsprechenden Kamerabildkoordinaten xᵢ, yᵢ einer jeden Kamera i zuordnet, wobei dann zeitgleich von allen Kameras in unveränderter Position Teilchen in einem Volumen aufgenommen werden, wobei anhand der ermittelten Position xᵢ, yᵢ eines Teilchen in den Kamerabildern mittels eines bekannten Triangulationsverfahrens die Position (X, Y, Z) dieses Teilchens im Volumen näherungsweise bestimmt wird, wobei fehlerbehaftete Triangulationen, die sich aus Mehrdeutigkeiten bei hohen Teilchendichten ergeben, durch ein robustes statisches Verfahren, wie z. B. das Ransac-Verfahren, eleminiert werden wobei durch die ursprüngliche Abbildungsgleichung diese Position (X, Y, Z) auf eine Position xᵢ', yᵢ' in den Kamerabildern der mindestens zwei Kameras abgebildet werden, wobei aus der Differenz (dxᵢ, dyᵢ) zwischen den Koordinaten (xᵢ, yᵢ) und (xᵢ', yᵢ') ein Korrekturfaktor für die ursprüngliche Abbildungsgleichung berechnet wird, so dass mit der korrigierten Abbildungsgleichung für alle Kameras i der Punkt (xᵢ, yᵢ) identisch mit dem Punkt (xᵢ', yᵢ') wird.

Dieses Verfahren erfolgt für viele Teilchen in einer Bildaufnahme sowie - falls erforderlich - für viele Aufnahmen, so dass die Korrekturfaktoren möglichst genau im ganzen Volumen bestimmt und so mit einem geeigneten statistischen Verfahren fehlerhafte Teilchenzuordnungen und andere Fehlerquellen bei diesem Verfahren minimiert werden können.

Das erfindungsgemäße Verfahren ist für alle funktionellen Formen einer Abbildungsgleichung einsetzbar.

Weitere vorteilhafte Merkmale sind den Unteransprüchen zu entnehmen.

Insbesondere ist vorgesehen, dass das betrachtete Volumen partiell abgeschattet ist, was z. B. durch eine Lochblende erfolgen kann, um fehlerhafte Zuordnungen von Teilchen zu minimieren.

Die Ansprüche 3 und 4 beschreiben die Möglichkeit, anhand der berechneten Teilchenpositionen die Größe und Orientierung des beleuchteten Volumens zu bestimmen, so dass mittels einer geeigneten Koordinatentransformation (Rotation und Translation) dieses Volumen entlang einer Koordinatenachse in x-, y-, oder z-Richtung orientiert werden kann.

Anhand der beiden Zeichnungen wird die Erfindung nachstehend beispielhaft näher erläutert.

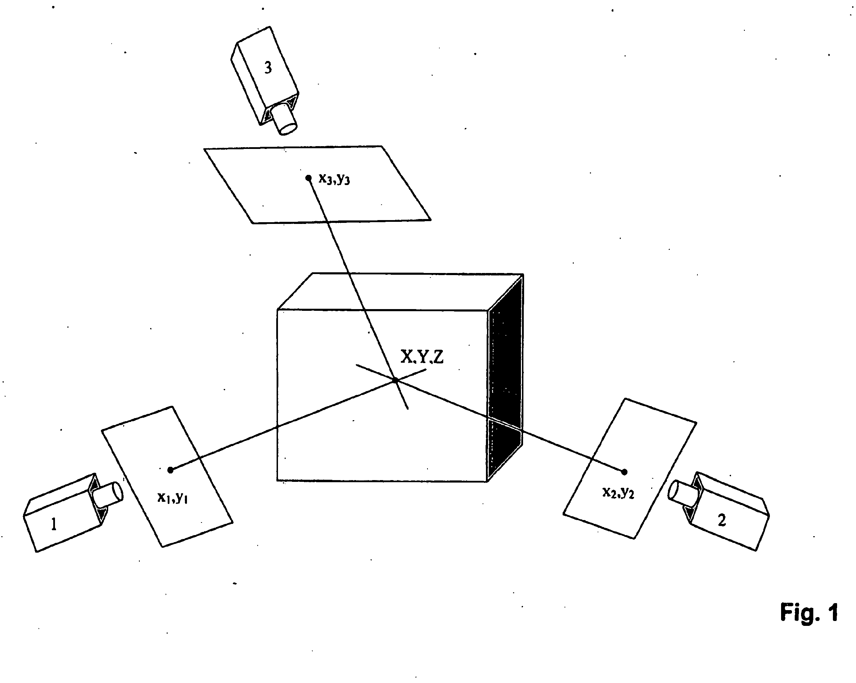

In der Figur 1 ist der Idealfall mit einer exakten Kalibrierung dargestellt, bei dem sich die drei Sehstrahlen der drei Kameras in exakt einem Punkt treffen. Hierbei wird davon ausgegangen, dass ein Teilchen in einer Raumposition X, Y, Z durch eine durch Kalibrierung bestimmte Abbildungsgleichung M₁ (X, Y, Z) auf eine Position (x₁, y₁) in dem Bild von Kamera 1 abgebildet wird, ebenso auf (x₂, y₂) von Kamera 2 und (x₃, y₃) von Kamera 3 mit Abbildungsgleichungen M₂ und M₃. Umgekehrt lässt sich aus den gemessenen Teilchenpositionen (xᵢ, yᵢ) auf den Bildern der Kameras 1 bis 3 die Position des Teilchen X, Y, Z im Raum durch eine Triangulation bestimmen, d. h. durch Rückverfolgen der Sehstrahlen durch den Raum, wobei sich alle drei Sehstrahlen exakt in dem Raumpunkt X, Y, Z treffen. Dies gilt allerdings nur, falls die Abbildungsgleichungen Mᵢ exakt, d. h. ohne Fehler, bestimmt wurden.

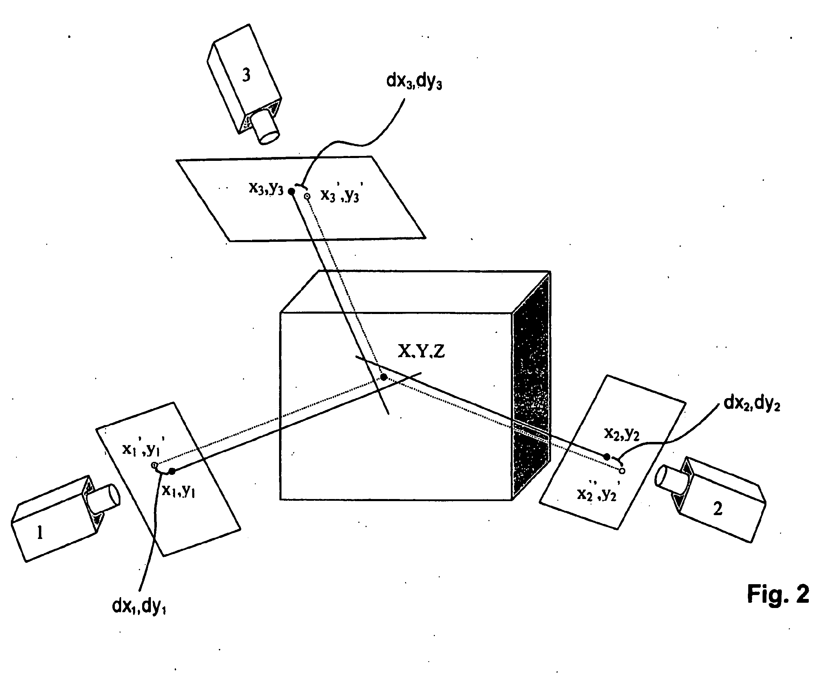

In der Figur 2 ist der mehr oder weniger übliche Fall dargestellt, bei dem die Abbildungsgleichungen, die durch eine Kalibrierung bestimmt wurden, fehlerbehaftet sind, d. h. die Sehstrahlen der drei Kameras treffen sich für dasselbe Teilchen nicht in genau einem Punkt. Die Triangulation liefert einen bestmöglichen Punkt X, Y, Z. Dieser Punkt entspricht allerdings auf den Kamerabildern nicht den gemessenen Punkten (xᵢ, yᵢ), sondern wird durch die Abbildungsgleichungen auf die abweichenden Punkte (xᵢ', yᵢ') = Mᵢ(X,Y,Z) abgebildet.

Das in den Ansprüchen dargestellte Verfahren basiert nun darauf, die Abbildungsgleichungen Mᵢ anhand der Differenzen (dxᵢ, dyᵢ) = (xᵢ', yᵢ') - (xᵢ, yᵢ) (Fig. 2) so zu korrigieren, dass sich die Sehstrahlen wieder in einem Punkt schneiden, d. h. (xᵢ, yᵢ) mit den Punkten (xᵢ', yᵢ') identisch werden. Dies geschieht für möglichst viele detektierte Teilchen in einer oder mehreren Bildaufnahmen, um die Abbildungsgleichung möglichst überall im beleuchteten Volumen zu korrigieren. Zusätzlich lassen sich mit einem robusten statistischen Verfahren, wie z. B. RANSAC, fehlerbehaftete Triangulationen eliminieren, die sich aus Mehrdeutigkeiten insbesondere bei hoher Teilchendichte ergeben.

Eine einfache Korrektur der ursprünglichen Abbildungsgleichung mit Hilfe der dxᵢ und dyᵢ gestaltet sich wie folgt, hier dargestellt für Kamera 1: Für Kamera 1 ist die ursprüngliche Abbildungsgleichung gegeben durch (x₁, y₁) = M₁(,Y,Z) für eine Raumposition (X,Y,Z) und einer daraus berechneten Position (x₁, y₁) im Bild von Kamera 1. Das Beobachtungsvolumen wird nun in ein feines Gitter unterteilt mit z. B. 10x10x10 Punkten in X, Y und Z, wobei für jede Gitterposition ein Korrekturfaktor (dx₁, dy₁) anhand des oben erläuterten Verfahrens berechnet wird, wobei jeweils die Korrekturfaktoren aller gefundenen Teilchen in der Nähe dieser Gitterposition in geeigneter Weise zu einem Wert dx₁ und dy₁ gemittelt werden. Dann wird eine korrigierte Abbildungsgleichung M₁' (X,Y,Z) berechnet, so dass für diese Funktion möglichst genau (x₁',y₁') = (x₁+dx₁,y₁+dy₁) = M₁'(X,Y,Z) für alle Gitterpositionen ist. Der Fit geschieht üblicherweise durch ein nicht-lineares Anpassungsverfahren wie z. B. Levenberg-Marquardt. Als Funktion für M₁' (X,Y,Z) kann z. B. wiederum ein Polynom dritten Grades in X, Y und Z gewählt werden, und der nicht-lineare Fit berechnet die Koeffizienten dieser Polynomfunktion und damit die neue korrigierte Abbildungsgleichung für Kamera 1. Dies wird ebenso für Kamera 2 und andere durchgeführt.

Ein mathematisch ähnliches Verfahren ist aus Soloff SM, Adrian RF, Liu ZC ... (bereits benannt) bekannt. Dieses Verfahren wird für die Bestimmung von optischen Verzerrungen anhand einer regelmäßigen Kalibrierplatte verwendet.

## Patentansprüche

1. Verfahren zur Korrektur einer Volumenabbildungsgleichung zur genaueren Bestimmung eines genaueren Geschwindigkeitsfeldes von Teilchen in einem Volumen, wobei das Volumen von mindestens zwei Kameras aus unterschiedlichen Richtungen aufgenommen wird, wobei zunächst durch eine Grobkalibrierung der Stellung der Kameras zueinander und relativ zu dem zu betrachtenden Volumen eine uspringliche Abbildungsgleichung bestimmt wird, die den Koordinaten X, Y, Z eines Punktes im Volumen die entsprechenden Kamerabildkoordinaten xᵢ, yᵢ einer jeden Kamera i zuordnet, wobei dann zeitgleich von allen Kameras in unveränderter Position Teilchen in einem Volumen aufgenommen werden, wobei anhand der ermittelten Position xᵢ, yᵢ eines Teilchens in den Kamerabildern mittels eines bekannten Triangulationsverfahrens die Position X, Y, Z dieses Teilchens im Volumen näherungsweise bestimmt wird, wobei fehlerbehaftete Triangulationen, die sich aus Mehrdeutigkeiten bei hohen Teilchendichten ergeben, durch ein robustes statisches Verfahren, wie z. B. das Ransac-Verfahren, eleminiert werden, wobei durch die ursprüngliche Abbildungsgleichung diese Position X, Y, Z auf eine Position xᵢ', yᵢ' in den Kamerabildern der mindestens zwei Kameras abgebildet wird, wobei aus der Differenz dxᵢ, dyᵢ, zwischen den Koordinaten xᵢ, yᵢ und xᵢ', yᵢ' ein Korrekturfaktor für die ursprüngliche Abbildungsgleichung berechnet wird, so dass mit der korrigierten Abbildungsgleichung für alle Kameras i der Punkt xᵢ, yᵢ identisch mit dem Punkt xᵢ', yᵢ' wird, wobei diese Korrektur für viele Teilchen im Volumen erfolgt.

2. Verfahren nach Anspruch 1,
**dadurch gekennzeichnet,**
**dass** das betrachtete Volumen partiell abgeschattet ist.

3. Verfahren nach Anspruch 1,
**dadurch gekennzeichnet,**
**dass** die berechneten Teilchenpositionen (X,Y,Z) im Volumen dazu benutzt werden, die Orientierung und Größe des beleuchteten Volumens zu bestimmen.

4. Verfahren nach Anspruch 3,
**dadurch gekennzeichnet,**
**dass** das beleuchtete Volumen anhand einer Rotation und Translation der Abbildungsgleichung (des Koordinatensystems) entlang von Koordinatenachsen orientiert wird.

## Claims

1. Method for correction of a volume imaging equation for more precise determination of a more precise speed field of particles in a volume, wherein the volume is recorded by at least two cameras from different directions, wherein initially through coarse calibration of the setting of the cameras relative to one another and relative to the volume to be considered an initial imaging equation is determined which associates with the co-ordinates X, Y, Z of a point in the volume the corresponding camera image co-ordinates xᵢ, yᵢ of each camera i, wherein then particles in a volume are recorded simultaneously by all cameras in unchanged position, wherein by way of the ascertained position xᵢ, yᵢ of a particle in the camera images the position X, Y, Z of this particle in the volume is approximately determined by means of a known triangulation method, wherein triangulations which are liable to error and which result from ambiguities at high particle densities are eliminated by a robust statistical method such as, for example, the Ransac method, wherein this position X, Y, Z is imaged by the initial imaging equation on a position xᵢ', yᵢ' in the camera images of the at least two cameras, wherein a correction factor for the initial imaging equation is calculated from the difference dxᵢ, dyᵢ between the co-ordinates xᵢ, yᵢ and xᵢ', yᵢ' so that with the corrected imaging equation the point xᵢ, yⱼ is identical with the point xᵢ, yᵢ for all cameras i and wherein this correction is carried out for all particles in the volume.

2. Method according to claim 1, **characterised in that** the considered volume is partially screened.

3. Method according to claim 1, **characterised in that** the calculated particle positions (X, Y, Z) in the volume are used for the purpose of determining the orientation and size of the illuminated volume.

4. Method according to claim 3, **characterised in that** the illuminated volume is oriented by way of a rotation and translation of the imaging equation (of the co-ordinate system) along co-ordinate axes.

## Revendications

1. Procédé pour corriger une équation de représentation en volume afin d'obtenir une détermination plus précise d'un champ de vitesses de particules dans un volume, dans lequel le volume est photographié par au moins deux appareils photographiques dans des directions différentes, dans lequel, en outre, on détermine tout d'abord, par un calibrage approximatif de la position des appareils photographiques l'un par rapport à l'autre et par rapport au volume à observer, une équation de représentation initiale qui associe aux coordonnées X, Y, Z d'un point situé dans le volume les coordonnées correspondantes xᵢ, yᵢ de chaque appareil i, dans lequel, en outre, tous les appareils photographiques restant dans une position inchangée photographient simultanément des particules situées dans un volume, dans lequel, en outre, sur la base de la position obtenue xi, yi d'une particule dans les images des appareils, et au moyen d'un procédé de triangulation connu, la position X, Y, Z de cette particule dans le volume est déterminée approximativement, les triangulations défectueuses qui résultent de polysémies en présence de hautes densités de particules étant alors éliminées par un robuste procédé statique comme, par exemple, le procédé de Ransac, dans lequel, en outre, sous l'effet de l'équation de représentation initiale, cette position X, Y, Z et reproduite sur une position xᵢ',yᵢ' dans les images des au moins deux appareils photographiques, et dans lequel, en outre, sur la base de la différence dxᵢ, dyᵢ entre les coordonnées xᵢ, yᵢ et xᵢ', yᵢ', on calcule un facteur de correction pour l'équation de représentation initiale de telle manière qu'avec l'équation de représentation corrigée, le point xᵢ, yᵢ devienne identique au point xᵢ', yᵢ' pour tous les appareils photographiques i, cette correction s'effectuant pour toutes les particules situées dans le volume.

2. Procédé selon la revendication 1,
**caractérisé en ce que**
le volume observé est partiellement ombragé.

3. Procédé selon la revendication 1,
**caractérisé en ce que**
les positions calculées (X, Y, Z) des particules situées dans le volume sont utilisées pour déterminer l'orientation et la grandeur du volume éclairé.

4. Procédé selon la revendication 3,
**caractérisé en ce que**
le volume éclairé est orienté au moyen d'une rotation et d'une translation de l'équation de représentation (du système de coordonnées) le long des axes de coordonnées.
